# EUROPEAN PATENT SPECIFICATION

(11) **EP 3 851 695 B1**
(45) Date of publication and mention of the grant of the patent: **24.08.2022**
(21) Application number: 20151603.6
(22) Date of filing: 14.01.2020
(51) Int. Cl.: F16D 55/226, F16D 65/56

(54) **BRAKE CALIPER DEVICE HAVING AUTOMATIC PAD WEAR COMPENSATION MECHANISM**
BREMSSATTELVORRICHTUNG MIT AUTOMATISCHEM BELAGVERSCHLEISSAUSGLEICHSMECHANISMUS
DISPOSITIF D'ÉTRIER DE FREIN COMPORTANT UN MÉCANISME DE COMPENSATION AUTOMATIQUE DE L'USURE DES PLAQUETTES

(43) Date of publication of application: 21.07.2021
(73) Proprietor: Liao, Chih-Hsien, Taichung City 40755 (TW)
(72) Inventor: Liao, Chih-Hsien, Taichung City 40755 (TW)
(74) Representative: V.O.

(56) References cited:
- EP-A1- 3 266 664
- US-A1- 2004 245 055

## Description

The invention relates to a brake caliper device, and more particularly to a brake caliper device having automatic pad wear compensation mechanism.

A conventional brake caliper device disclosed in Taiwanese Utility Model Patent No. M394267 includes a main body unit, a rocker arm unit that is rotatably coupled to the main body unit, two pad units, a brake cable unit and a hydraulic piston unit, and is adapted to be used with a brake disk for braking. The main body unit has an operating space, the rocker arm unit has two rocker arms respectively and rotatably coupled to two opposite sides of the operating space, each of the pad units has a pad that is adapted to be disposed between a corresponding one of the rocker arms and the brake disk, and the brake cable unit has an outer tube and a steel cable extending therethrough. One end of the outer tube abuts against a side of one of the rocker arms, and the steel cable has a sleeved end portion that is fixedly embedded to the other one of the rocker arms, and a lever end portion that is operable to be pulled by a handbrake lever.

A user is permitted to perform brake operation via a brake pedal, which triggers the hydraulic piston unit to drive the pad units to abut against the brake disk, or via the handbrake lever, which triggers the brake cable unit to pull the rocker arms to drive the pad units to abut against the brake disk.

Another conventional brake caliper device disclosed in Taiwanese Utility Model Patent No. M415088 includes a main body unit, a piston unit, a pad unit and a handbrake unit. The main body unit has two opposite sides and an operating space, the pad unit has two positioning members that are connected to the piston unit and two pads respectively mounted to the positioning members, and the handbrake unit has an actuating member and two abutment members respectively disposed in proximity to the opposite sides of the main body unit. The abutment members are driven by first and second actuating portions of the actuating member to move away from the sides to push the two pads toward a brake disk for braking.

However, the pad units of the abovementioned brake caliper devices may wear off over a period of time under regular usage, causing to braking to be less effective if the devices are not regularly maintenance and replaced.

Another brake caliper device is disclosed by US 2004/245055 A1, comprising a piston, a valve lifter displaceable in the piston direction during mechanical braking. A strut inserted between the piston and the valve lifter consists of two elements screwed into each other for adjusting its length. The first element and the piston stop to which it is abutted are modeled like a rotating clutch and has an end part penetrating into a bore in the piston stop. The first element is passed through by a channel able to communicate the cylinder chamber with the piston bore. The channel is closed by a movable obturator which under fluid pressure is supported against the bottom of the bore.

EP 3 266 664 A1 discloses an electric parking brake, including a driving shaft, an actuator, first and second braking members, and first and second linings. The driving shaft has a threaded portion threadedly engaging the first braking member such that, through operation of the actuator, the first lining is driven by the first braking member to move toward a side surface of a brake disk in a direction to thereby move the second braking member to move toward an opposite side surface of the brake disk in an opposite direction, so that the first and second linings are moved toward each other to clamp the brake disk therebetween.

In the light of the above, an object of the disclosure is to provide a brake caliper device that can alleviate the drawback of the prior art.

This object is solved by a brake caliper device according to claim 1.

According to the invention, the brake caliper device is adapted to be used with a brake disk, which has a first side surface and a second side surface opposite to the first side surface. The brake caliper device includes a main body unit, first and second pads, and a caliper actuator unit. The main body unit includes a first seat that is adapted to be disposed proximally to the first side surface of the brake disk, and that is formed with a mounting hole extending along a mounting axis (L), and a second seat that is co-movably connected to the first seat, that is adapted to be disposed proximally to the second side surface of the brake disk, and that cooperates with the first seat to define a receiving space therebetween for receiving a part of the brake disk.

The first pad is adapted to be disposed between the first seat and the first side surface of the brake disk, and the second pad is adapted to be disposed between the second seat and the second side surface of the brake disk.

The caliper actuator unit is mounted to the mounting hole of the first seat, and includes an actuating member, a bolt member that abuts against the actuating member, and a threaded sleeve that is threadedly engaged to the bolt member. When the actuating member is driven by an external force, the actuating member is capable of vibrating axially to cause an axial vibration of the bolt member, which prompts the threaded sleeve to rotate relative to the bolt member for pushing the first pad toward the brake disk, thereby automatically providing a travel stroke that compensates for pad wear.

Other features and advantages of the disclosure will become apparent in the following detailed description of the embodiment with reference to the accompanying drawings, of which:
FIG. 1 is a perspective view of an embodiment of a brake caliper device according to the disclosure;
FIG. 2 is an exploded perspective view of the embodiment;
FIG. 3 is a schematic sectional view of the embodiment;
FIG. 4 is a view similar to FIG. 3, illustrating the embodiment in a braking state;
FIGS. 5 and 6 are views similar to FIG. 3, illustrating the embodiment undergoing automatic pad wear compensation; and
FIG. 7 is a view taken along line VII-VII in FIG. 3.

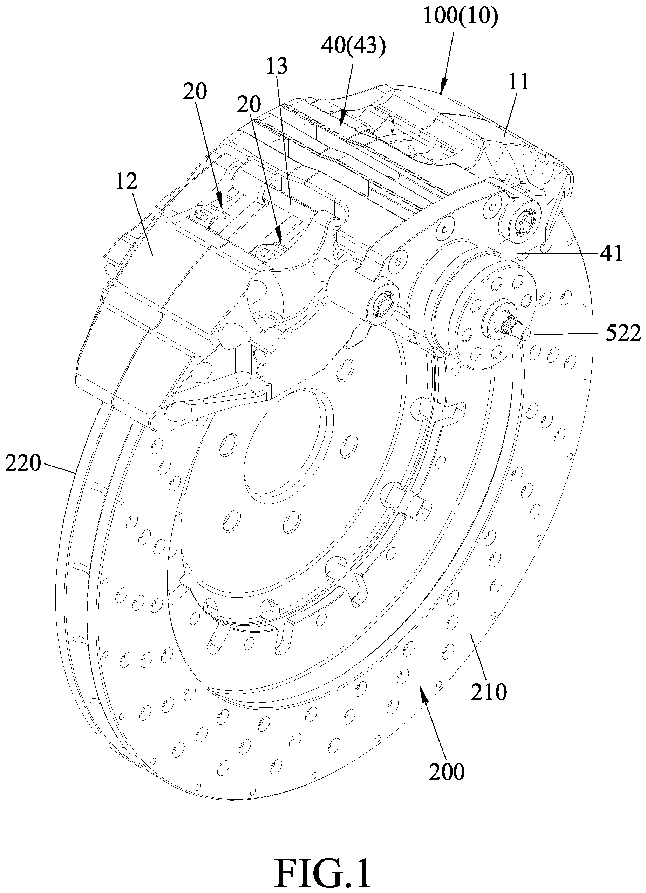

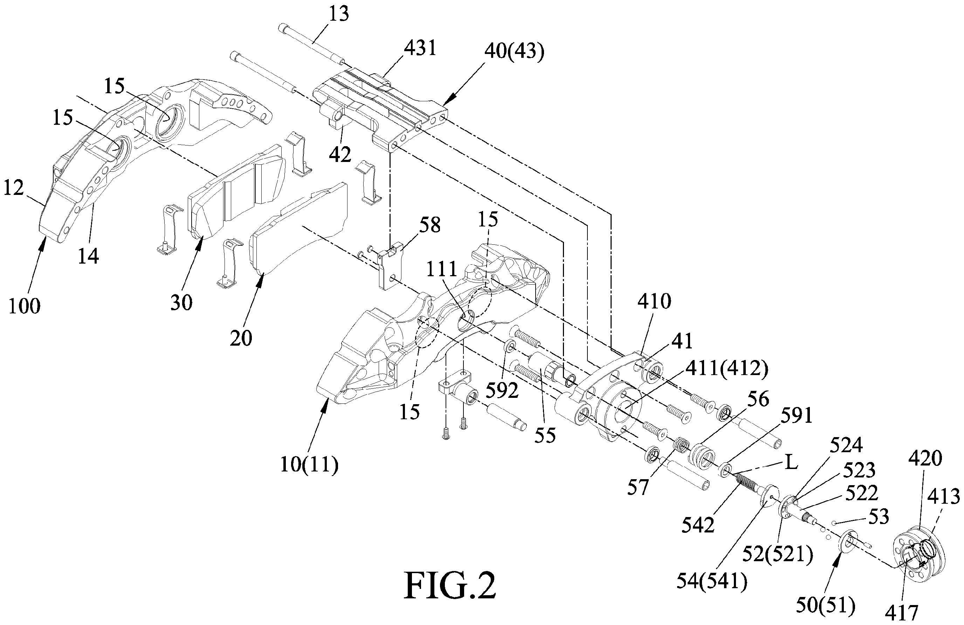

Referring to FIGS. 1 to 3, an embodiment of a brake caliper device 100 according to the disclosure is adapted to be used with a brake disk 200. The brake disk 200 has a first side surface 210, and a second side surface 220 opposite to the first side surface 210. The brake caliper device includes a main body unit 10, a first pad 20, a second pad 30, a pad squeezing unit 40, and a caliper actuator unit 50.

The main body unit 10 includes a first seat 11 that is adapted to be disposed proximally to the first side surface 210 of the brake disk 200, a second seat 12 that is co-movably connected to the first seat 11 and that is adapted to be disposed proximally to the second side surface 220 of the brake disk 200, and two guiding rods 13 that interconnect the first and second seats 11, 12. The first and second seats 11, 12 cooperatively define a receiving space 14 therebetween for receiving a part of the brake disk 200. The first seat 11 is formed with a mounting hole 111 extending along a mounting axis (L) and in spatial communication with the receiving space 14. In addition, each of the first and second seats 11, 12 is formed with two cylindrical grooves 15 that are for piston units (not shown) to be installed thereto to drive the first and second pads 20, 30. The mechanism by which the piston units drive the first and second pads 20, 30 is not the subject of this disclosure, and is therefore not further described.

The first pad 20 is adapted to be disposed between the first seat 11 and the first side surface 210 of the brake disk 200, and the second pad 30 is adapted to be disposed between the second seat 12 and the second side surface 220 of the brake disk 200.

The pad squeezing unit 40 is slidably coupled to the main body unit 10 to slide along the mounting axis (L), and includes a mounting seat 41 that is disposed at an outer side of the first seat 11 opposite to the receiving space 14, a movable seat 42 that is disposed between the second seat 12 and the second pad 30, and a connecting member 43 that interconnects the mounting and movable seats 41, 42. The mounting seat 41 has an inner body 410 that is connected to the connecting member 43 and an outer seat body 420 that is coupled to a side of the inner seat body 410 distal from the connecting member 43, and is formed with a central hole 411 that is centered at the mounting axis (L) and that extends through the inner sea body 410 and the outer seat body 420. The central hole 411 includes an enlarged section 412 that is defined by the inner and outer seat bodies 410, 420, a front shrunk section 413 that extends along the mounting axis (L) from a side of the enlarged section 412 through the outer seat body 420, a rear shrunk section 414 that extends along the mounting axis (L) from a side of the enlarged section 412 distal from the front shrunk section 413 through the inner seat body 410, a front shoulder surface 415 that is formed on the outer seat body 420 and that interconnects the enlarged section 412 and the front shrunk section 413, and a rear shoulder surface 416 that is formed on the inner seat body 410 and that interconnects the enlarged section 412 and the rear shrunk section 414. The enlarged section 412 has a non-circular part 417 proximate to the front shoulder surface 415. The connecting member 43 has two guiding slots 431 that permit the guiding rods 13 to respectively and slidably extend therethrough.

The caliper actuator unit 50 is mounted to the mounting hole 111 of the first seat 11 and the central hole 411 of the mounting seat 41, and includes a positioning member 51, an actuating member 52, a plurality of roller members 53 that are disposed between the positioning member 51 and the actuating member 52, a bolt member 54 that abuts against the actuating member 52, a threaded sleeve 55 that is threadedly engaged to the bolt member 54, a restoring member 56, a resilient member 57, a push block 58 that is fixed to the first pad 20, a first bearing 591 that is mounted between the bolt member 54 and the resilient member 57, and a second bearing 592 that is mounted between the threaded sleeve 55 and the push block 58.

The positioning member 51 is fixed to the mounting seat 41, abuts against the front shoulder surface 415, and is disposed at a side of the actuating member 52. Specifically, the positioning member 51 is mounted to the enlarged section 412 of the mounting seat 41, and is fixed to the front shoulder surface 415 such that the positioning member 51 is nonrotatable. The positioning member 51 has a first side surface 511 that faces the actuating member 52 and that are formed with a plurality of angularly and equidistantly spaced-apart first grooves 512 surrounding the mounting axis (L).

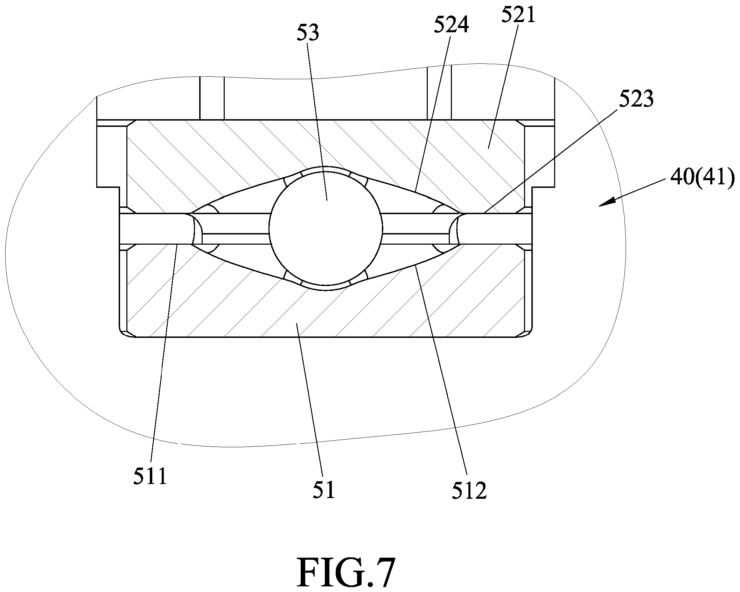

The actuating member 52 extends along the mounting axis (L), is rotatable relative to the positioning member 51, and is mounted to the central hole 411 of the mounting seat 41. Specifically, the actuating member 52 has an actuating disk 521 that is mounted to the enlarged section 412 of the mounting seat 41 and that is proximate to the positioning member 51, and an actuating rod 522 that is connected to the actuating disk 521 and that extends through the front shrunk section 413. The actuating disk 521 has a second side surface 523 that faces the positioning member 51 and that are formed with a plurality of angularly and equidistantly spaced-apart second grooves 524 surrounding the mounting axis (L). In the embodiment, each of the first and second grooves 512, 524 is elongated, extends about the mounting axis (L), and has a groove depth that varies in the extending direction thereof. Specifically, the groove depth is largest at a middle part of each of the first and second grooves 512, 524, and decreases gradually away from the middle part (See FIG. 7). The actuating rod 522 extends through the front shrunk section 413 in such a way that a portion thereof is exposed to the external environment.

The roller members 53 are respectively nested in the first grooves 512, with exposed ends thereof in contact with the actuating member 52. When the actuating member 52 rotates relative to the positioning member 51, the second grooves 524 are permitted to be nested or to be unnested from the roller members 53.

The bolt member 54 is mounted to the central hole 411 of the mounting seat 41. Specifically, the bolt member 54 has an abutment disk 541 that abuts against the actuating member 52 in the enlarged section 412 of the mounting seat 41, and a threaded rod portion 542 that is connected to the abutment disk 541 and that extends away from the actuating member 52. The abutment disk 541 has a non-circular cross-sectional shape that corresponds in shape to the non-circular part 417 of the enlarged section 412, such that the bolt member 54 is nonrotatable relative to the mounting seat 41.

The threaded sleeve 55 is slidably mounted between the central hole 411 of the mounting seat 41 and the mounting hole 111 of the first seat 11, and is formed with a threaded hole 551 that threadedly engage the threaded rod portion 542 of the bolt member 54.

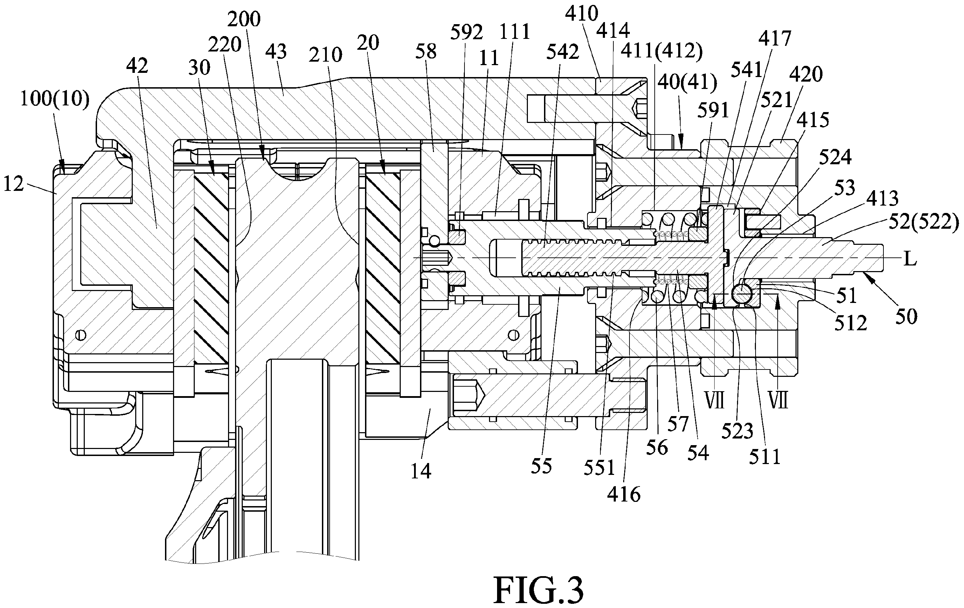

The restoring member 56 is a compression spring that has two opposite ends respectively abutting against the rear shoulder surface 416 of the first seat 41 and the abutment disk 541 of the bolt member 54, and that generates a restoring force for resiliently pushing the actuating disk 521 of the actuating member 52 to be in contact with the positioning member 51. The resilient member 57 has two opposite ends respectively abutting against the abutment disk 541 of the bolt member 54 (via the first bearing 591 as shown in FIG. 3) and the threaded sleeve 55 for pushing the threaded sleeve 55 away from the abutment disk 541 of the bolt member 54 and toward the first pad 20. The push block 58 is fastened to the first pad 20 and provides a larger contact surface area between the threaded sleeve 55 and the first pad 20.

The first and second bearings 591, 592 are thrust bearings, with the first bearing 591 mounted between the abutment disk 541 of the bolt member 54 and the resilient member 57. The first and second bearings 591, 592 enable free rotation of the threaded sleeve 55 relative to the bolt member 54.

Referring back to FIGS. 1 to 3, after the brake caliper device 100 is fully assembled and is fixedly mounted to the brake disk 200, in a normal circumstance where the brake caliper device is not activated, there exists gaps respectively between the first side surface 210 and the first pad 20, and between the second side surface 220 and the second pad 30, thereby allowing the brake disk 200 to freely rotate.

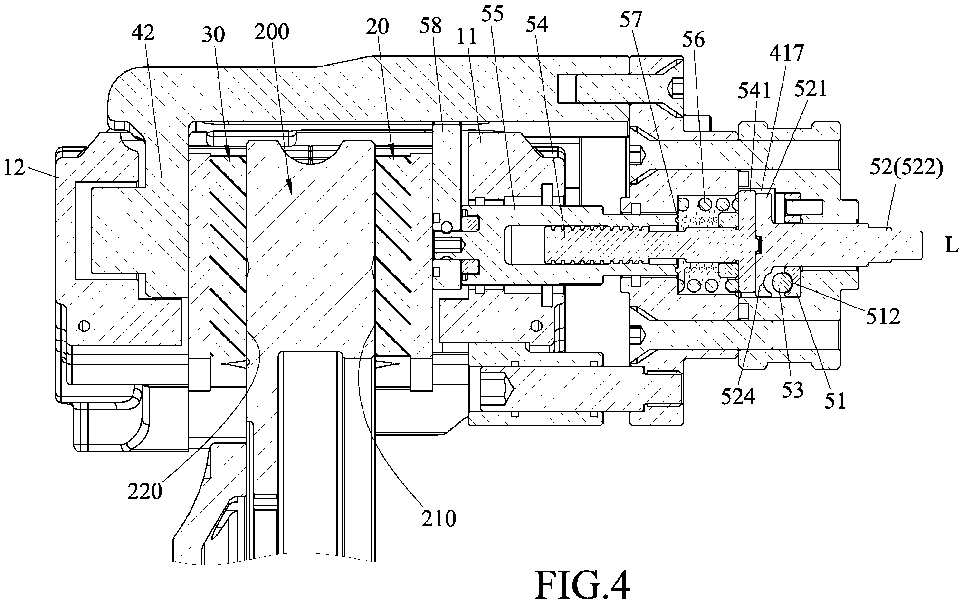

Referring to FIG. 4, when a user applies an external force (via handbrake) to rotate the actuating rod 522 of the actuating member 52, exposed ends of the roller members 53, which are nested in the first grooves 512 of the positioning member 51, would constantly be in contact with and be nested in and out of the second grooves 524 of the actuating member 52 (as long as the second grooves 524 revolves around the mounting axis (L)), and push the actuating disk 521 axially away from the positioning member 51 whenever the roller members 53 are not nested in the second grooves 524. Whenever the actuating member 52 is driven to move along the mounting axis (L), the restoring member 56 is prompted to generate the restoring force to push the actuating disk 521 toward the positioning member 51. The exchange of these two opposing forces generates axial vibration of the actuating member 52 for driving reciprocating displacement thereof along the mounting axis (L). As the bolt member 54 is unable to rotate, the axial vibration from the actuating member 52 is directly transferred to the bolt member 54 and the threaded sleeves 55 to push the first pad 20 toward the first side surface 210 and the second pad 30 toward the second side surface 220 for braking. While the abutment disk 541 of the bolt member 54 receives the axial vibration from the actuating member 52, the threaded sleeve 55 does not rotate relative to the bolt member 54 if the first and second pads 20, 30 are not worn enough (as shown in FIG. 4), as there are not enough space for facilitating axial movement of the threaded sleeve 55 relative to the abutment disk 541 of the bolt member 54 via threaded rotation. While in a braking state, the gaps directly adjacent to the brake disk 200 disappear, while new gaps appear between the first seat 11 and the push blocks 58 and between the second seat 12 and the movable seat 42.

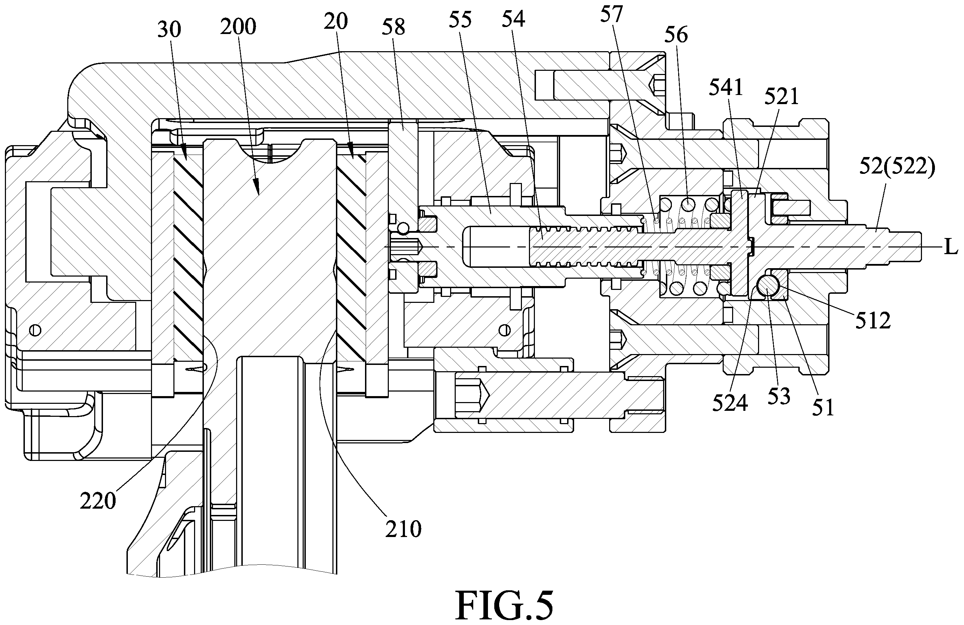

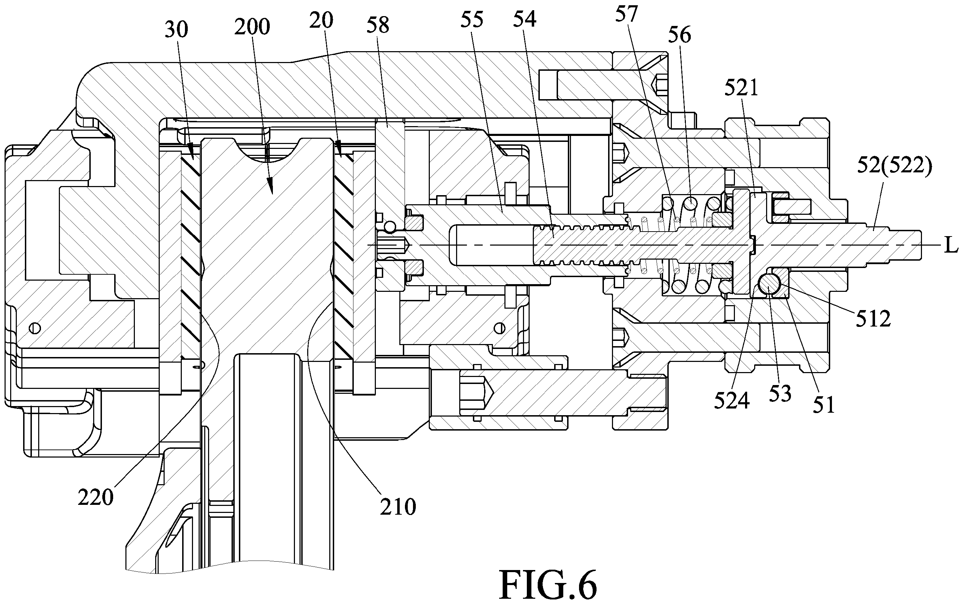

Referring to FIGS. 5 and 6, when the first and second pads 20, 30 are worn, when the user performed the abovementioned operation again, due to the larger gaps caused by pad wear and due to the presence of backlash between the threaded hole 551 of the threaded sleeve 55 and the threaded rod portion 542 of the bolt member 54, the threaded sleeve 55 is prompted by the axial vibration of the bolt member 54 to rotate for pushing the first pad 20 via the push block 58 toward the brake disk 200, thereby automatically providing a travel stroke that compensates for pad wear. At the same time, when the threaded sleeve 55 is driven to push the first pad 20 to the brake disk 200, the second pad 30 is also pushed via the pad squeezing unit 40 toward the brake disk 200 for automatically providing a travel stroke that compensates for pad wear.

Overall, when the user rotates the actuating rod 522 of the actuating member 52, the vibrational force generated by the positioning member 51, the actuating member 52 and the roller members 53 of the caliper actuator unit 50 enables rotation of the threaded sleeve 55 relative to the bolt member 54, automatically providing a travel stroke to compensates for pad wear.

## Claims

1. A brake caliper device (100) adapted to be used with a brake disk (200), the brake disk (200) having a first side surface (210) and a second side surface (220) opposite to the first side surface (210), said brake caliper device (100) including:
a main body unit (10) including
a first seat (11) that is adapted to be disposed proximally to the first side surface (210) of the brake disk (200), and that is formed with a mounting hole (111) extending along a mounting axis (L), and
a second seat (12) that is co-movably connected to said first seat (11), that is adapted to be disposed proximally to the second side surface (220) of the brake disk (200), and that cooperates with said first seat (11) to define a receiving space (14) therebetween for receiving a part of the brake disk (200);
a first pad (20) that is adapted to be disposed between said first seat (11) and the first side surface (210) of the brake disk (200);
a second pad (30) that is adapted to be disposed between said second seat (12) and the second side surface (220) of the brake disk (200);
a pad squeezing unit (40) slidably coupled to said main body unit (10) to slide along the mounting axis (L), and including a mounting seat (41) that is formed with a central hole (411) centered at the mounting axis (L) and that is disposed at an outer side of said first seat (11) opposite to said receiving space (14), a movable seat (42) that is disposed between said second seat (12) and said second pad (30), and a connecting member (43) that interconnects said mounting and movable seats (41, 42);
a caliper actuator unit (50) mounted to said mounting hole (111) of said first seat (11) and including:
an actuating member (52),
a bolt member (54) that abuts against said actuating member (52),
a threaded sleeve (55) that is threadedly engaged to said bolt member (54),
a positioning member (51) that is fixed to said mounting seat (41) and that is disposed at a side of said actuating member (52), and
a plurality of roller members (53) that are disposed between said positioning member (51) and said actuating member (52);
wherein said actuating member (52) and said bolt member (54) are mounted to said central hole (411) of said mounting seat (41), and said threaded sleeve (55) is slidably mounted between said central hole (411) of said mounting seat (41) and said mounting hole (111) of said first seat (11);
wherein when said threaded sleeve (55) is driven to push said first pad (20) to the brake disk (200), said second pad (30) is also pushed via said pad squeezing unit (40) toward the brake disk (200) for automatically providing a travel stroke that compensates for pad wear;
wherein said positioning member (51) has a first side surface (511) that faces said actuating member (52) and that is formed with a plurality of angularly spaced-apart first grooves (512) surrounding the mounting axis (L);
wherein said actuating member (52) has a second side surface (523) that faces said positioning member (51) and that is formed with a plurality of angularly spaced-apart second grooves (524) surrounding the mounting axis (L);
wherein said roller members (53) are respectively nested in said first grooves (512), with exposed ends thereof in contact with said actuating member (52) for driving reciprocating displacement of said actuating member (52) along the mounting axis (L) to generate a vibration force;
wherein said brake caliper device (100) further includes a restoring member (56) that resiliently abuts against said first seat (41) and said bolt member (54), and that generates a restoring force for pushing said actuating member (52) to be in contact with said positioning member (51) whenever said actuating member (52) is driven to move along the mounting axis (L); and
wherein when said actuating member (52) is driven by an external force, said actuating member (52) is capable of vibrating axially to cause an axial vibration of said bolt member (54), which prompts said threaded sleeve (55) to rotate relative to said bolt member (54) for pushing said first pad (20) toward the brake disk (200), thereby automatically providing a travel stroke that compensates for pad wear;
said brake caliper device (100) being **characterized in that**:
said caliper actuator unit (50) further includes a resilient member (57) that is resiliently disposed between said bolt member (54) and said threaded sleeve (55) for pushing said threaded sleeve (55) toward said first pad (20), and a push block (58) that is fixed to said first pad (20);
said caliper actuator unit (50) further includes a first bearing (591) mounted between said bolt member (54) and said resilient member (57), and a second bearing (592) mounted between said threaded sleeve (55) and said push block (58);
said bolt member (54) of said caliper actuator unit (50) has an abutment disk (541) that abuts against said actuating member (52) and a threaded rod portion (542) that is connected to said abutment disk (541); and
said first and second bearings (591, 592) are thrust bearings, and said first bearing (591) is mounted between said abutment disk (541) of said bolt member (54) and said resilient member (57).

2. The brake caliper (100) according to Claim 1, further **characterized in that** each of said first and second grooves (512, 524) is elongated, extends about the mounting axis (L), and has a groove depth that varies in the extending direction thereof.

3. The brake caliper (100) according to Claim 2, further **characterized in that** the groove depth is largest at a middle part of each of said first and second grooves (512, 524), and decreases gradually in two opposite angular directions from said middle part.

4. The brake caliper (100) according to any one of Claims 1 to 3, further **characterized in that**:
said first grooves (512) are equidistantly spaced-apart; and
said second grooves (524) are equidistantly spaced-apart.

5. The brake caliper (100) according to Claim 1, further **characterized in that**:
said mounting seat (41) has an inner seat body (410) that is connected to said connecting member (43) and an outer seat body (420) that is coupled to a side of said inner seat body (410) distal from said connecting member (43);
said central hole (411) extends through said inner seat body (410) and said outer seat body (420), and includes an enlarged section (412) that is defined by said inner and outer seat bodies (410, 420); and
said enlarged section (412) has a non-circular part (417) defined by an inner surface of said outer seat body (420), said abutment disk (541) having a non-circular cross-sectional shape that corresponds in shape to said non-circular part (417) of said enlarged section (412) for restricting rotation of said bolt member (54).

## Patentansprüche

1. Bremssattelvorrichtung (100), die zur Verwendung mit einer Bremsscheibe (200) angepasst ist, wobei die Bremsscheibe (200) eine erste Seitenfläche (210) und eine zweite Seitenfläche (220) gegenüber der ersten Seitenfläche (210) aufweist, wobei die Bremssattelvorrichtung (100) einschließt:
eine Hauptkörpereinheit (10) einschließlich eines ersten Sitzes (11), der angepasst ist, um proximal zu der ersten Seitenfläche (210) der Bremsscheibe (200) angeordnet zu werden, und der mit einem Befestigungsloch (111) ausgebildet ist, das sich entlang einer Befestigungsachse (L) erstreckt, und eines zweiten Sitzes (12), der mit dem ersten Sitz (11) mitbeweglich verbunden ist, der geeignet ist, proximal zu der zweiten Seitenfläche (220) der Bremsscheibe (200) angeordnet zu werden, und der mit dem ersten Sitz zusammenwirkt (11), um dazwischen einen Aufnahmeraum (14) zum Aufnehmen eines Teils der Bremsscheibe (200) zu definieren;
eines ersten Belages (20), der geeignet ist, zwischen dem ersten Sitz (11) und der ersten Seitenfläche (210) der Bremsscheibe (200) angeordnet zu werden;
eines zweiten Belages (30), der geeignet ist, zwischen dem zweiten Sitz (12) und der zweiten Seitenfläche (220) der Bremsscheibe (200) angeordnet zu werden;
einer Belagquetscheinheit (40), die verschiebbar mit der Hauptkörpereinheit (10) gekoppelt ist, um entlang der Befestigungsachse (L) zu gleiten, und einen Befestigungssitz (41) einschließt, der mit einem zentralen Loch (411) ausgebildet ist, das an der Befestigungsachse (L) zentriert ist und der an einer Außenseite des ersten Sitzes (11) gegenüber dem Aufnahmeraum (14) angeordnet ist, ein beweglicher Sitz (42), der zwischen dem zweiten Sitz (12) und dem zweiten Belag (30) angeordnet ist und ein Verbindungselement (43), das den Befestigungssitz und den beweglichen Sitz (41, 42) miteinander verbindet:
einer Bremssattel-Betätigungseinheit (50), die an dem Befestigungsloch (111) des ersten Sitzes (11) befestigt ist und Folgendes einschließt:
eines Betätigungselements(52),
eines Bolzenelements (54), das an dem Betätigungselement (52) anliegt,
einer Gewindehülse (55), die mit dem Bolzenelement (54) in Gewindeeingriff steht,
eines Positionierungselements (51), das an dem Befestigungssitz (41) befestigt ist und das an einer Seite des Betätigungselements (52) angeordnet ist, und
einer Vielzahl von Rollenelementen (53), die zwischen dem Positionierungselement (51) und dem Betätigungselement (52) angeordnet sind;
wobei das Betätigungselement (52) und das Bolzenelement (54) an dem zentralen Loch (411) des Befestigungssitzes (41) befestigt sind und die Gewindehülse (55) verschiebbar zwischen dem zentralen Loch (411) des Befestigungssitzes (41) und dem Befestigungsloch (111) des ersten Sitzes (11) befestigt ist;
wobei, wenn die Gewindehülse (55) angetrieben wird, um den ersten Belag (20) zu der Bremsscheibe (200) zu drücken, der zweite Belag (30) auch über die Belagquetscheinheit (40) zu der Bremsscheibe (200) geschoben wird, um automatisch einen Bewegungshub bereitzustellen, der den Belagverschleiß kompensiert;
wobei das Positionierungselement (51) eine erste Seitenfläche (511) aufweist, die dem Betätigungselement (52) zugewandt ist und die mit einer Vielzahl von winklig beabstandeten ersten Nuten (512) ausgebildet ist, die die Befestigungsachse (L) umgeben;
wobei das Betätigungselement (52) eine zweite Seitenfläche (523) aufweist, die dem Positionierungselement (51) zugewandt ist und die mit einer Vielzahl von winklig beabstandeten zweiten Nuten (524) ausgebildet ist, die die Befestigungsachse (L) umgeben;
wobei die Rollenelemente (53) jeweils in den ersten Nuten (512) verschachtelt sind, wobei freiliegende Enden davon in Kontakt mit dem Betätigungselement (52) sind, um eine hin- und
hergehende Verschiebung des Betätigungselements (52) entlang der Befestigungsachse (L) anzutreiben, um eine Vibrationskraft zu erzeugen;
wobei die Bremssattelvorrichtung (100) ferner ein Rückstellelement (56) einschließt, das elastisch an dem ersten Sitz (41) und dem Bolzenelement (54) anliegt und das eine Rückstellkraft zum Drücken des Betätigungselements (52) erzeugt, um in Kontakt mit dem Positionierungselement (51) zu stehen, wann immer das Betätigungselement (52) angetrieben wird, um sich entlang der Befestigungsachse (L) zu bewegen: und
wobei, wenn das Betätigungselement (52) durch eine äußere Kraft angetrieben wird, das Betätigungselement (52) in der Lage ist, axial zu vibrieren, um eine axiale Vibration des Bolzenelements (54) zu bewirken, was die Gewindehülse (55) veranlasst, sich relativ zu dem Bolzenelement (54) zu drehen, zum Drücken des ersten Belags (20) in Richtung der Bremsscheibe (200), wodurch automatisch ein Bewegungshub bereitgestellt wird, der Belagverschleiß kompensiert;
wobei die Bremssattelvorrichtung (100) **dadurch gekennzeichnet ist, dass**:
die Bremssattel-Betätigungseinheit (50) ferner ein elastisches Element (57) einschließt, das elastisch zwischen dem Bolzenelement (54) und der Gewindehülse (55) angeordnet ist, um die Gewindehülse (55) in Richtung des ersten Belags (20) zu drücken, und einen Druckblock (58), der an dem ersten Belag (20) befestigt ist;
die Bremssattel-Betätigungseinheit (50) ferner ein erstes Lager (591), das zwischen dem Bolzenelement (54) und dem elastischen Element (57) befestigt ist, und ein zweites Lager (592), das zwischen der Gewindehülse (55) und dem Druckblock befestigt ist, einschließt (58);
das Bolzenelement (54) der Bremssattel-Betätigungseinheit (50) eine Anlagescheibe (541) aufweist, die an dem Betätigungselement (52) anliegt, und einen Gewindestangenabschnitt (542), der mit der Anlagescheibe (541) verbunden ist; und
das erste und das zweite Lager (591, 592) Axiallager sind und das erste Lager (591) zwischen der Anlagescheibe (541) des Bolzenelements (54) und dem elastischen Element (57) befestigt ist.

2. Bremssattel (100) nach Anspruch 1, ferner **dadurch gekennzeichnet, dass** jede der ersten und zweiten Nuten (512, 524) länglich ist, sich um die Befestigungsachse (L) erstreckt und eine Nuttiefe hat, die in der Erstreckungslänge davon variiert.

3. Bremssattel (100) nach Anspruch 2, ferner **dadurch gekennzeichnet, dass** die Nuttiefe an einem mittleren Teil jeder der ersten und zweiten Nuten (512, 524) am größten ist und von diesen allmählich in zwei entgegengesetzten Winkelrichtungen des Mittelteils abnimmt.

4. Bremssattel (100) nach einem der Ansprüche 1 bis 3, ferner **dadurch gekennzeichnet, dass**:
die ersten Nuten (512) äquidistant voneinander beabstandet sind; und
die zweiten Nuten (524) äquidistant voneinander beabstandet sind.

5. Bremssattel (100) nach Anspruch 1, ferner **dadurch gekennzeichnet, dass**:
der Befestigungssitz (41) einen inneren Sitzkörper (410) aufweist, der mit dem Verbindungselement (43) verbunden ist, und einen äußeren Sitzkörper (420), der mit einer Seite des inneren Sitzkörpers (410) distal von dem Verbindungselement (43) gekoppelt ist;
das zentrale Loch (411) sich durch den inneren Sitzkörper (410) und den äußeren Sitzkörper (420) erstreckt und einen vergrößerten Abschnitt (412) einschließt, der durch den inneren und den äußeren Sitzkörper (410, 420) definiert ist; und
der vergrößerte Abschnitt (412) einen nicht kreisförmigen Teil (417) aufweist, der durch eine Innenfläche des äußeren Sitzkörpers (420) definiert ist, wobei die Anlagescheibe (541) eine nicht kreisförmige Querschnittsform hat, die in ihrer Form diesem nicht kreisförmigen Teil (417) des vergrößerten Abschnitts (412) entspricht, um die Drehung des Bolzenelements (54) zu beschränken.

## Revendications

1. Dispositif étrier de frein (100) adapté pour être utilisé avec un disque de frein (200), le disque de frein (200) présentant une première surface latérale (210) et une seconde surface latérale (220) opposée à la première surface latérale (210), ledit dispositif étrier de frein (100) comprenant :
une unité corps principal (10) comprenant :
un premier siège (11) qui est adapté pour être disposé de manière proximale par rapport à la première surface latérale (210) du disque de frein (200), et qui est formé avec un trou de montage (111) qui s'étend le long d'un axe de montage (L), et
un second siège (12) qui est connecté audit premier siège (11) de manière à pouvoir se déplacer avec celui-ci, et qui est adapté pour être disposé de manière proximale par rapport à la seconde surface latérale (220) du disque de frein (200), et qui coopère avec ledit premier siège (11) afin de définir entre eux un espace de réception (14) destiné à recevoir une partie du disque de frein (200) ;
une première plaquette (20) qui est adaptée pour être disposées entre ledit premier siège (11) et la première surface latérale (210) du disque de frein (200) ;
une seconde plaquette (30) qui est adaptée pour être disposées entre ledit second siège (12) et la seconde surface latérale (220) du disque de frein (200) ;
une unité de serrage de plaquette (40) accouplée de manière coulissante à ladite unité corps principal (10), destinée à coulisser le long de l'axe de montage (L), et comprenant un siège de montage (41) qui est formé avec un trou central (411) centré au niveau de l'axe de montage (L), et qui est disposé au niveau d'un côté extérieur dudit premier siège (11) opposé audit espace de réception (14), un siège mobile (42) qui est disposé entre ledit second siège (12) et ladite seconde plaquette (30), et un élément de connexion (43) qui interconnecte lesdits sièges de montage et mobile (41, 42) ;
une unité actionneur d'étrier (50) montée sur ledit trou de montage (111) dudit premier siège (11), et comprenant :
un élément d'actionnement (52),
un élément boulon (54) qui vient en butée contre ledit élément d'actionnement (52),
un manchon fileté (55) qui vient en prise par vissage avec ledit élément boulon (54),
un élément de positionnement (51) qui est fixé sur ledit siège de montage (41), et qui est disposé au niveau d'un côté dudit élément d'actionnement (52), et
une pluralité d'éléments rouleaux (53) qui sont disposés entre ledit élément de positionnement (51) et ledit élément d'actionnement (52) ;
dans lequel ledit élément d'actionnement (52) et ledit élément boulon (54) sont montés dans ledit trou central (411) dudit siège de montage (41), et ledit manchon fileté (55) est monté de manière coulissante entre ledit trou central (411) dudit siège de montage (41) et ledit trou de montage (111) dudit premier siège (11) ;
dans lequel, lorsque ledit manchon fileté (55) est entraîné pour pousser ladite première plaquette (20) vers le disque de frein (200), ladite seconde plaquette (30) est également poussée par l'intermédiaire de ladite unité de serrage de plaquette (40) vers le disque de frein (200), afin de fournir automatiquement une course de déplacement qui compense l'usure d'une plaquette ;
dans lequel ledit élément de positionnement (51) présente une première surface latérale (511) qui fait face audit élément d'actionnement (52), et qui est formée avec une pluralité de premières rainures espacées de manière angulaire (512) qui entourent l'axe de montage (L) ;
dans lequel ledit élément d'actionnement (52) présente une seconde surface latérale (523) qui fait face audit élément de positionnement (51), et qui est formée avec une pluralité de secondes rainures espacées de manière angulaire (524) qui entourent l'axe de montage (L) ;
dans lequel lesdits éléments rouleaux (53) sont emboîtés respectivement dans lesdites premières rainures (512), leurs extrémités exposées étant en contact avec ledit élément d'actionnement (52) afin de provoquer un déplacement en va-et-vient dudit élément d'actionnement (52) le long de l'axe de montage (L) de manière à générer une force de vibration ;
dans lequel ledit dispositif étrier de frein (100) comprend en outre un élément de rappel (56) qui vient en butée élastiquement contre ledit premier siège (41) et ledit élément boulon (54), et qui génère une force de rappel destinée à pousser ledit élément d'actionnement (52) de façon à être en contact avec ledit élément de positionnement (51) chaque fois que ledit élément d'actionnement (52) est entraîné pour se déplacer le long de l'axe de montage (L) ; et
dans lequel, lorsque ledit élément d'actionnement (52) est entraîné par une force extérieure, ledit élément d'actionnement (52) peut vibrer axialement afin de provoquer une vibration axiale dudit élément boulon (54), ce qui provoque la rotation dudit manchon fileté (55) par rapport audit élément boulon (54), afin de pousser ladite première plaquette (20) vers le disque de frein (200), en fournissant de ce fait automatiquement une course de déplacement qui compense l'usure d'une plaquette ;
ledit dispositif étrier de frein (100) étant **caractérisé en ce que** :
ladite unité actionneur d'étrier (50) comprend en outre un élément élastique (57) qui est disposé élastiquement entre ledit élément boulon (54) et ledit manchon fileté (55), afin de pousser ledit manchon fileté (55) vers ladite première plaquette (20), et un bloc de poussée (58) qui est fixé sur ladite première plaquette (20) ;
ladite unité actionneur d'étrier (50) comprend en outre un premier palier (591) monté entre ledit élément boulon (54) et ledit élément élastique (57), et un second palier (592) monté entre ledit manchon fileté (55) et ledit bloc de poussée (58) ;
ledit élément boulon (54) de ladite unité actionneur d'étrier (50), présente un disque de butée (541) qui vient en butée contre ledit élément d'actionnement (52), et une partie tige filetée (542) qui est connectée audit disque de butée (541) ; et
lesdits premier et second paliers (591, 592) sont des paliers de butée, et ledit premier palier (591) est monté entre ledit disque de butée (541) dudit élément boulon (54), et ledit élément élastique (57).

2. Étrier de frein (100) selon la revendication 1, **caractérisé en outre en ce que** chacune desdites premières et secondes rainures (512, 524) est ovale, s'étend autour de l'axe de montage (L), et présente une profondeur de rainure qui varie dans sa direction d'extension.

3. Étrier de frein (100) selon la revendication 2, **caractérisé en outre en ce que** la profondeur de rainure est la plus grande au niveau d'une partie médiane de chacune desdites premières et secondes rainures (512, 524), et diminue progressivement dans les deux directions angulaires opposées à partir de ladite partie médiane.

4. Étrier de frein (100) selon l'une quelconque des revendications 1 à 3, **caractérisé en outre en ce que** :
lesdites premières rainures (512) sont espacées de manière équidistante ; et
lesdites secondes rainures (524) sont espacées de manière équidistante.

5. Étrier de frein (100) selon la revendication 1, **caractérisé en outre en ce que** :
ledit siège de montage (41) présente un corps de siège intérieur (410) qui est connecté audit élément de connexion (43), et un corps de siège extérieur (420) qui est accouplé à un côté dudit corps de siège intérieur (410) de manière distale à partir dudit élément de connexion (43) ;
ledit trou central (411) s'étend à travers ledit corps de siège intérieur (410) et ledit corps de siège extérieur (420), et comprend une section agrandie (412) qui est définie par lesdits corps de siège intérieur et extérieur (410, 420) ; et
ladite section agrandie (412) présente une partie non circulaire (417) définie par une surface intérieure dudit corps de siège extérieur (420), ledit disque de butée (541) présentant une forme en coupe transversale non circulaire, dont la forme correspond à celle de ladite partie non circulaire (417) de ladite section agrandie (412), afin de limiter la rotation dudit élément boulon (54).
